# EUROPÄISCHE PATENTSCHRIFT

(11) **EP 0 398 017 B1**
(45) Veröffentlichungstag und Bekanntmachung des Hinweises auf die Patenterteilung: **09.11.1994**
(21) Anmeldenummer: 90106690.2
(22) Anmeldetag: 06.04.1990
(51) Int. Cl.: A22C 25/14

(54) **Verfahren zum Entweiden von Fischen und Einrichtung zur Durchfürung des Verfahrens**
Method and device for iviscerating fish
Procédé et dispositif pour l'éviscération de poissons

(30) Priorität: 16.05.1989 DE 3915815
(43) Veröffentlichungstag der Anmeldung: 22.11.1990
(73) Patentinhaber: NORDISCHER MASCHINENBAU RUD. BAADER GMBH + CO KG, 23560 Lübeck (DE)
(72) Erfinder: Jahnke, Joachim, D-2400 Lübeck (DE)

(56) Entgegenhaltungen:
- DE-A- 2 232 633
- DE-A- 3 327 968
- DE-A- 3 343 789
- DE-B- 2 832 259
- FR-A- 2 616 625
- US-A- 3 469 278
- SOVIET PATENTS ABSTRACTS Section Ch, Week 9008, 4. April1990 Derwent Publications Ltd., London, GB; Class & SU-A-325 175 (TEKHYBROM) 23. August 1989

## Beschreibung

Die Erfindung betrifft ein Verfahren zum Entweidenungeköpfter Fische, insbesondere von Zuchtfischen wie Forellen, durch Öffnen der Bauchhöhle durch vom Bereich des Anus' ausgehendes Schlitzen der die Bauchhöhle umschließenden Bauchdecke längs des Bauchsaums, sowie eine Einrichtung zur Durchführung des Verfahrens mit einem Förderer, umfassend mindestens eine, den zu bearbeitenden Fisch mindestens an seinem Rücken stützende und mit dem Schwanz vorausschiebende Fischaufnahme, sowie relativ zu der Bahn desselben steuerbare Mittel zum verfahrensgemäßen Bearbeiten der Fische. wobei die Mittel zum Bearbeiten ein rotierend angetriebenes Schneidwerkzeug zum Öffnen der Bauchhöhle zwischen den Bereichen des Anus' und der Kiemenhöhle und eine die Eingeweide durch Absaugen entnehmende Einrichtung umfassen. Eine derartige Vorrichtung ist aus der DE-B-2 832 259 bekannt.

Beim Entweiden von Fischen, insbesondere dieser Gattung, kommt es darauf an, daß durch diesen Prozeß die Bauchhöhle von jeglichen Eingeweideteilen befreit wird, was auch das Entfernen der Blutbahn (Niere) mit einschließt. Dabei ist von entscheidender Bedeutung, daß die Bauchinnenwände unbeschädigt bleiben. Darüberhinaus besteht die Forderung, auf einfache Art und Weise einrichten zu können, daß die Kiemen dabei im Fisch verbleiben oder nicht. Aufgrund der anatomischen Gegebenheiten ist eine günstige Voraussetzung dafür, daß die Bearbeitung vom Anus zum Kopf hin erfolgt.

Nach einem derartigen Funktionsprinzip arbeitende Einrichtungen sind bekannt.

So ist aus der DE-PS 28 32 259 eine Vorrichtung zu entnehmen, bei der der Fisch auf dem Rücken in einer Muldenkette liegend durch Schieben an seinem Kopfende mit dem Schwanz voraus durch den Wirkbereich von Bearbeitungswerkzeugen gefördert wird. Die Bearbeitung erfolgt durch Einsteuern der Bearbeitungswerkzeuge in die Bahn der Fische, wobei das Ziel verfolgt wird, nach dem Schlitzen der Bauchdecke die Eingeweide durch Wasserzufuhr in die Bauchhöhle aufzuschwemmen und durch Abpumpen zu entfernen. Aufgrund der Gestaltung des Abpumpwerkzeuges ist eine Entnahme der Kiemen nicht möglich und gelingt die vollständige Entfernung des Schlundes nicht sicher.

Auch die den Gegenstand der DE-OS 22 32 633 bildende Vorrichtung führt zu dem gleichen Ergebnis. Die Förderung der Fische erfolgt dort durch einen deren Schwanz erfassenden Förderer unter ziehender Wirkung.

Ein weiterer gattungsgemäßer Stand der Technik findet sich in der DE-PS 33 43 789 , die eine Vorrichtung zeigt, bei der die Fische durch Hinterfassen der Kiemendeckel mit dem Kopf voraus gefördert werden. Nach dem Öffnen der Bauchhöhle wird in diese eine den Fisch begleitende Saugdüse im Bereich der Kiemenhöhle eingefahren und während der Begleitbewegung durch an dieser angeordnete steuerbare Messerelemente der Schlund durchgetrennt.

Eine die Kiemen und Eingeweide entfernende Vorrichtung ist aus der DE-OS 15 79 427 zu entnehmen. Bei dieser Vorrichtung werden die Fische durch Klammern am Kopf mit diesem voraus gefördert und zunächst mit zwei quer zur Förderrichtung geführten Einschnitten im Bereich des Unterkiefers und der Kiemenhöhle versehen. Anschließend wird die Bauchhöhle zwischen dem Kiemenhöhleneinschnitt und dem Anus geöffnet, die Fleischbrücke zwischen dem Kiemenhöhlen- und dem Unterkiefereinschnitt durch ein Zangenwerkzeug erfaßt und die Kiemen und Eingeweide herausgerissen.

Eine ähnliche Vorrichtung zeigt die DE-OS 25 30 013.

Nachteilig ist bei diesen Vorrichtungen, daß die korrekte Arbeitsweise von einer sehr genauen Positionierung der Fische abhängt, die schon aufgrund der naturgegebenen Schwankungen der maßlichen Proportionen der Fische nicht sicher zu erreichen ist, Außerdem sind die Werkzeuge funktionsbedingt z. T. sehr aufwendig und anfällig.

Es ist die Aufgabe der Erfindung, das maschinelle Entweiden so zu verbessern, daß dauerhaft ein einwandfreies Arbeitsergebnis bei Fischen auch unterschiedlicher Größe bei hoher Wirtschaftlichkeit erzielbar ist. Darüberhinaus soll unter diesen Prämissen durch einfache Umstellung eine Entnahme der Eingeweide wahlweise mit den Kiemen oder Belassen der Kiemen in dem Fisch möglich sein.

Diese Aufgabe wird erfindungsgemäß durch ein Verfahren gelöst, das dadurch gekennzeichnet ist, daß der Darm im Bereich des Anus' gleichzeitig mit dem Öffnen der Bauchhöhle von der Bauchdecke gelöst wird, und daß der Schlund und wahlweise die Kiemen klemmend erfaßt und im Mundhöhlenbereich abgerissen werden.

Zur Durchführung dieses Verfahrens eignet sich die eingangs beschriebene Einrichtung in einer Ausführung, die dadurch gekennzeichnet ist, daß als Schneidwerkzeug zum Öffnen der Bauchhöhle ein Kreismesser mit dessen Flanken zugeordneten, sich im wesentlichen radial bis in die Nähe der Schneide des Kreismessers erstreckenden Messerklingen Verwendung findet, die Einrichtung zum Absaugen eine Saugdüse mit gegen die Vorschubrichtung der Fische weisender Saugöffnung aufweist wobei der Saugdüse separat steuerbare klemmittel zum zeitweisen Festhalten der Eingeweide und wahlweise der Kiemen zugeordnet sind, und zwischen dem Schneidwerkzeug und der Saugdüse ein Schaber zum mindestens partiellen Öffnen der Blutbahn des Fisches vorgesehen ist.

Zum Fixieren und Ausrichten des zu bearbeitenden Fisches kann der Förderer einzeln, hintereinander angeordnete Fördermulden umfassen, die an ihrem vorauslaufenden Ende mit einem steuerbaren Klemmechanismus für den Schwanzbereich des Fisches und deren nachlaufendes Ende mit einem den Unterkiefer des Fisches übergreifenden Kopfanschlag versehen sein können. Die Anwendung derart ausgestatteter Fördermulden ermöglicht den Einsatz eines mit dem Förderer synchron angetriebenen starren Kurvengetriebes einfachen Zuschnitts für die Steuerung der Mittel zum Bearbeiten der Fische, wenn die Fördermulden für die Aufnahme der Fische, sowohl hinsichtlich der Höhenlage ihrer den Rücken der Fische stützenden Bodenfläche, als auch hinsichtlich der Anordnung des Kopfanschlages relativ zu dem durch das Kurvengetriebe vorgegebenen Steuerweg, insbesondere des Schneidwerkzeuges zum Öffnen der Bauchhöhle fischgrößenabhängig ausgeführt werden. Zur Vereinfachung der Beschickung können die Fischmulden größeneinheitlich durch unterschiedliche Farbgebung gekennzeichnet sein.

Als Schneidwerkzeug zum Öffnen der Bauchhöhle hat sich ein Kreismesser mit durch symmetrische Anfasung erzeugter Schneide bewährt. Die auf den Flanken des Kreismessers flach aufliegenden Messerklingen weisen in Drehrichtung des Kreismessers mindestens eine vorauslaufende Kante auf, die mindestens in dem in den Bereich der Anfasung des Kreismessers aufragenden Teil jeweils durch eine an der der Flanke des Kreismessers zuweisenden Fläche der Messerklinge angeordnete Fase ausgeschärft ist. Die Blutbahn kann mit Hilfe eines Schabers geöffnet werden, der aus einem an seiner Außenkontur der Querschnittsform der Bauchhöhle im wesentlichen angepaßten spatelförmigen Element besteht, das zumindest in dem am tiefsten in die Bauchhöhle des Fisches eintauchenden Bereich mit einer scharfen, gegen die Laufrichtung der Fördermulden weisenden Konturkante versehen ist.

Zur sicheren Aufnahme der Eingeweide kann die Saugdüse mit einer gegen die Laufrichtung der Fördermulden weisender Saugöffnung versehen sein und ein Gehäuse aufweisen, dessen in die Bauchhöhle des Fisches eintauchender Teil der Querschnittsform der Bauchhöhle im wesentlichen angepaßt ist.

Dabei erweist sich als besonders effektiv, wenn der in die Bauchhöhle des Fisches eintauchende Teil der Saugdüse mit einem schaufelartigen Vorsatz versehen ist. Sollen die Kiemen im Fisch verbleiben, so kommt eine Saugdüse zum Einsatz, welche so gestaltet ist, daß die seitlichen Begrenzungsflächen des schaufelartigen Vorsatzes von dem vorausweisenden Ende desselben in Laufrichtung der Fördermulden aufsteigende Abweiserkanten bilden, die beim Aussteuern der Saugdüse aus der Bauchhöhle eine Abweisung des Kiemenapparates bewirken. Zum Mitentfernen der Kiemen findet eine Saugdüse Verwendung, deren schaufelartiger Vorsatz als flacher Löffel ausgebildet ist, so daß dieser den Kiemenapparat zu unterfassen und in Verbindung mit einer dem schaufelartigen Vorsatz zugeordneten, separat steuerbaren Klemmvorrichtung zum zeitweisen Festhalten des Schlundes mit den Eingeweiden zusammen herauszureißen vermag.

Die erfindungsgemäße Einrichtung wird nachfolgend anhand eines in der Zeichnung dargestellten Ausführungsbeispiels näher erläutert.

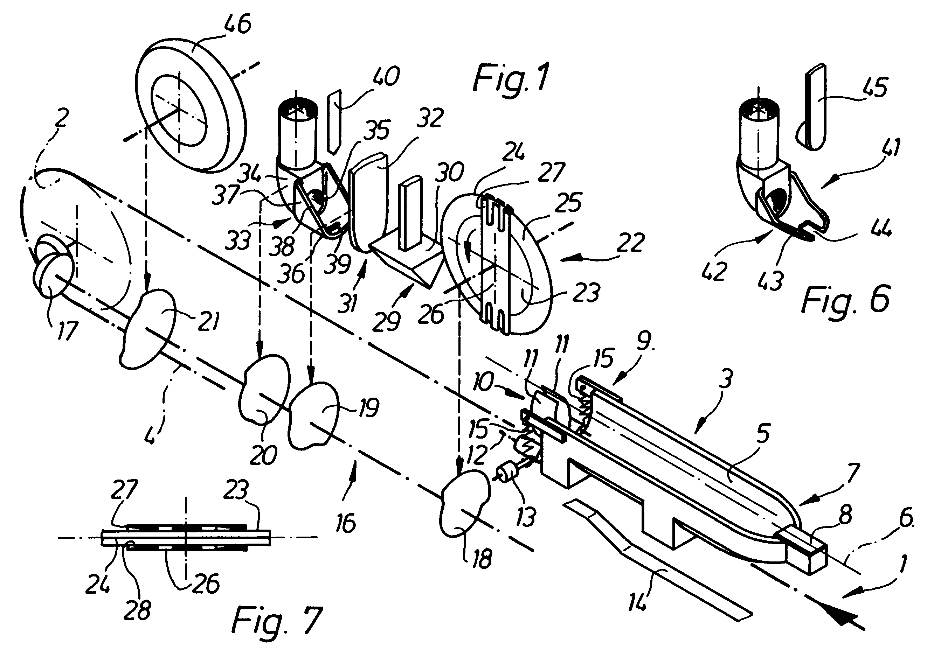

Es zeigen
- Fig. 1: das Arbeitsfeld der Mittel zum Bearbeiten als Ausschnitt aus der Gesamteinrichtung in vereinfachter Form und axonometrisch dargestellt,
- Fig. 2: einen Längsschnitt durch das Arbeitsfeld der Mittel zum Bearbeiten im Augenblick des Eindringens des Schneidwerkzeuges (22) in die Bauchhöhle,
- Fig. 3: einen Längsschnitt gemäß Fig. 2 mit in die Bauchhöhle eingetauchtem Ausbreiter (29) und Schaber (31) ,
- Fig. 4: einen Längsschnitt gemäß Fig. 2 nach Eintauchen der Saugdüse (33) in die Bauchhöhle,
- Fig. 5: einen Längsschnitt gemäß Fig. 2 im Augenblick der Aussteuerung der Saugdüse (33) aus der Bauchhöhle,
- Fig. 6: eine axonometrische Darstellung der für das Mitentfernen der Kiemen vorgesehenen Saugdüse (41),
- Fig. 7: eine ausschnittweise Draufsicht auf das Schneidwerkzeug (22) , gesehen senkrecht auf die Messerklingen (26).

In einem nicht näher dargestellten Maschinengestell einer Bearbeitungsmaschine für Fische ist ein in geeigneter Weise kontinuierlich angetriebener, um zwei Umlenkräder 2 umgelenkter, endloser Kettenförderer 1 angeordnet. Dieser ist mit Fischaufnahmen 3 zur Aufnahme der zu bearbeitenden Fische bestückt, die auf nicht gezeigten Schlitten, unter gleicher Teilung an der Förderkette 4 verteilt montiert, befestigt sind. Die Fischaufnahmen 3 bestehen aus oben offenen Fördermulden 5 , deren Symmetrieebene 6 in Laufrichtung des Kettenförderers 1 ausgerichtet ist. Jede Fördermulde 5 ist an ihrem nachlaufenden Stirnende 7 geschlossen ausgeführt und dort mit einem Kopfanschlag 8 versehen. Dem vorauslaufenden Ende 9 jeder Fördermulde 5 ist ein Klemmechanismus 10 in Form einer Rumpfklammer zugeordnet, die zwei schalenförmige Zangenschenkel 11 mit griffiger Innenfläche umfassen, und die um zu der Laufrichtung des Kettenförderers 1 parallel ausgerichtete Achsen 12 symmetrisch zu der Symmetrieebene 6 der Fördermulde 5 schwenkbar gelagert sind. Die Zangenschenkel 11 sind durch mit diesen verbundene Rollenhebel 13 über gestellfeste Steuerlineale 14 gegen die Kraft von Federn 15 in ihre Öffnungsstellung steuerbar.

In dem nicht gezeigten Gestell ist weiter ein Kurvengetriebe 16 angeordnet, das seinen Antrieb durch ein mit einem der Umlenkräder 2 verbundenes Kegelradgetriebe 17 erhält. Das Kurvengetriebe 16 ist mit Kurvenscheiben 18, 19, 20, 21 bestückt, mit denen geeignete, nicht näher dargestellte Übertragungsgestänge in Kontakt stehen, die dem Kurvenverlauf folgen und mit über der Bahn der Fördermulden 5 in deren Symmetrieebene 6 verfahrbar angebrachten Werkzeugen in Wirkverbindung stehen. Die Werkzeuge umfassen in der Reihenfolge ihrer Aktivierung ein rotierend angetriebenes, durch die Kurvenscheibe 18 gesteuertes Schneidwerkzeug 22 mit einem Kreismesser 23 , dessen Schneide 24 durch symmetrische Anfasungen 25 erzeugt ist. Das Kreismesser 23 weist an seinen Flanken flach anliegende Messerklingen 26 auf, die sich im wesentlichen radial und bis in die Nähe der Schneide 24 erstrecken und deren vorauslaufende Kanten 27 jeweils im Bereich der Anfasung 25 durch eine an der der Flanke des Kreismessers 23 zuweisenden Fläche der Messerklinge 26 angeordnete Fase 28 ausgeschärft ist. Die Messerklinge 26 ist vorzugsweise fingerartig gefächert, wobei der nachlaufende Finger an seiner vorauslaufenden Kante wie Kante 27 ausgeschärft ist.

Dem Schneidwerkzeug 22 schließt sich ein Ausbreiter 29 an, der als dachförmiger Klotz 30 mit zu den Fördermulden 5 und in deren Symmetrieebene 6 weisender Firstkante ausgebildet ist. Der Ausbreiter 29 bildet mit einem folgenden Schaber 31 eine durch die Kurvenscheibe 19 gesteuerte Steuereinheit , wobei jedoch der Ausbreiter 29 gegen Federkraft oder sein Eigengewicht aus der Bahn der Fördermulden 5 verdrängbar ist. Der Schaber 31 besteht aus einen spatelförmigen, quer zu der Symmetrieebene 6 ausgerichteten Element 32, dessen gegen die Laufrichtung der Fördermulden 5 weisende Konturkante scharfkantig ausgebildet ist.

Das folgende Werkzeug ist als Saugdüse 33 ausgebildet, die mittels der Kurvenscheibe 20 bezüglich ihrer relativen Höhenlage zu der Bahn der Fördermulden 5 steuerbar ist, und die mit einer geeigneten, nicht gezeigten Saugeinrichtung in Verbindung steht. Die Saugdüse 33 besteht aus einem Gehäuse 34 von der Gestalt eines Rohr-Viertelbogens mit aufragendem Anschlußstutzen für die Saugeinrichtung und ist so ausgerichtet, daß ihre Saugöffnung 35 gegen die Bewegungsrichtung des Kettenförderers 1 weist. Die die Saugöffnung 35 in ihrem unteren Bereich begrenzende Wand des Gehäuses 34 ist vorgezogen und bildet einen schaufelartigen Vorsatz 36 mit seitlichen Begrenzungsflächen 37 , die zu der Saugöffnung 35 hin, d. h. in Bewegungsrichtung der Fördermulden 5 , ansteigende Abweiserkanten 38 aufweisen. Der Vorsatz 36 ist in seiner Schaufelfläche mit einem schlitzförmigen Durchbruch 39 versehen, in den eine Haltezunge 40 entsprechenden Querschnitts eingeschoben werden kann, die zu diesem Zweck an der nicht gezeigten Halterung für die Saugdüse 33 in Steuerrichtung derselben verschiebbar angeordnet ist. Dabei kann bedarfweise eine nicht gezeigte Feder vorgesehen sein, die die Haltezunge 40 in Eingriff mit dem Durchbruch 39 zu halten bestrebt ist.

Anstelle der Saugdüse 33 kann eine entsprechend Fig. 6 ausgeführte Saugdüse 41 eingesetzt werden. Diese ist mit einem Vorsatz 42 versehen, der jedoch als flacher Löffel 43 ausgebildet ist, dessen vorausweisendes Ende durch eine Aussparung 44 gabelförmig gestaltet ist. Bei Einsatz der Saugdüse 41 findet anstelle der haltezunge 40 ein Klemmhalter 45 Verwendung, der mit der Löffelfläche eine Klemmvorrichtung zu bilden vermag.

Die Reihe der Werkzeuge endet schließlich mit einer rotierend angetriebenen Bürste 46 , deren Lage durch die Kurvenscheibe 21 gesteuert wird.

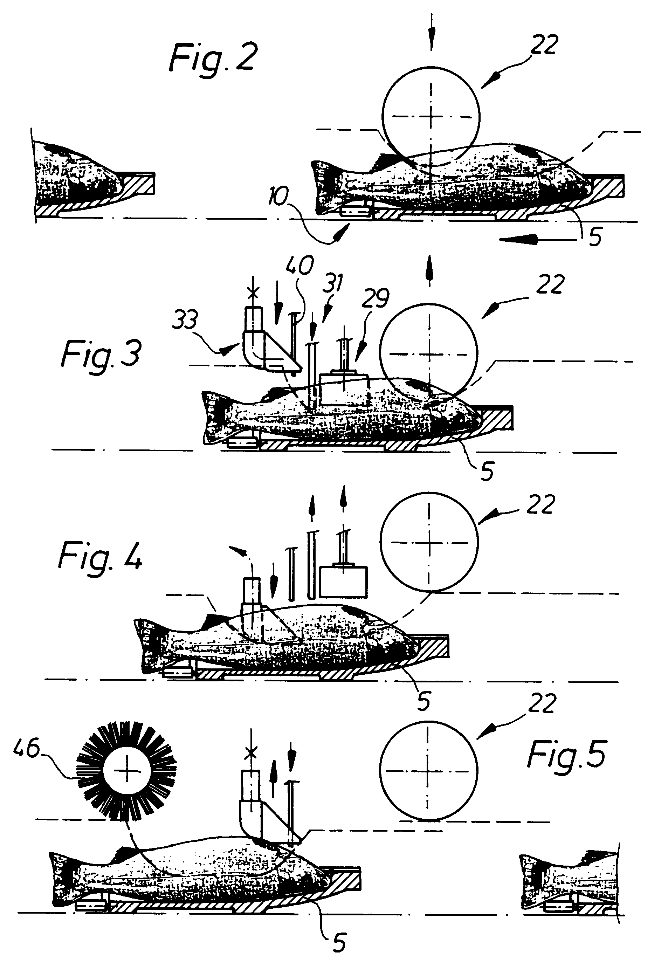

Die Wirkungsweise der Einrichtung wird nun unter Verfolgung eines Fisches durch die Einrichtung beschrieben, wobei die wesentlichen Stationen aus den Figuren 2 bis 5 entnehmbar sind.

Der Fisch wird mit dem Rücken nach unten und dem Schwanz voraus in die Fördermulde 5 eingelegt, wobei dafür Sorge zu tragen ist, daß der Kopfanschlag 8 den Unterkiefer des Fisches überfaßt. Das Einlegen desselben geschieht in einem Aufgabebereich der Einrichtung, in welchen Steuerlineale 14 dafür sorgen, daß der Klemmechanismus 10 an dem vorauslaufenden Ende 9 der Fördermulde 5 geöffnet ist. Der ausgewählte Fisch hat eine mit der Fördermulde 5 abgestimmte Gesamtlänge, so daß der Schwanzbereich des Fisches im Bereich des Klemmechanismus' zu liegen kommt. Die derart beladene Fördermulde 5 wird nun in den Arbeitsbereich der Werkzeuge vorgeschoben, die über der Bahn der Fördermulden 5 durch Wirkung des Kurvengetriebes 16 in Bereitschaft gehalten werden. Vor Erreichen des ersten Werkzeuges sind die Rollenhebel 13 des Klemmechanismus' 10 von den Steuerlinealen 14 abgelaufen und haben damit das Schließen der Zangenschenkel 11 über die Federn 15 ermöglicht, so daß der Fisch nun auch im Schwanzbereich gehalten wird.

Gemäß Fig. 2 erfolgt nun zunächst das Einsteuern des Schneidwerkzeuges 22 . Da die diesen Vorgang steuernde Kurvenscheibe 18 in ihrer Einstellung auf die Lage des nachlaufenden Stirnendes 7 der Fördermulde 5 abgestimmt und ihre Kontur den anatomischen Gegebenheiten der entsprechenden Fischgröße angepaßt ist, taucht das Kreismesser 23 dieses Werkzeuges am Anus des Fisches in dessen Bauchhöhle ein und verläßt diese im Bereich der Kiemenhöhle, wie mit gestrichelter Linie angedeutet ist. Bei diesem Prozeß muß dafür Sorge getragen werden, daß der Darm am Anus gelöst wird, da sonst ein einwandfreies Entfernen der Eingeweide nicht möglich ist.

Diese Aufgabe übernehmen die an den Flanken des Kreismessers 23 angebrachten Messerklingen 26 , die mit ihren ausgeschärften Kanten 27 bewirken, daß der eine Breitendimension aufweisende Darm sicher gelöst wird.

Im weiteren Fortschritt des Fisches wird nun gemäß Fig. 3 über die Kurvenscheibe 19 die den Ausbreiter 29 und das spatelförmige Element 32 umfassende Steuereinheit in die Bahn der Fördermulde 5 eingesteuert. Dabei eilt der Ausbreiter 29 ein wenig voraus, so daß die Bauchlappen der geöffneten Bauchhöhle gespreizt werden, bevor das spatelförmige Element 32 in diese eindringt. Der Eintauchweg dieses Elementes ist dabei so bemessen, daß es federbelastet auf der auf dem Rückgrat aufliegenden Blutbahn aufsetzt und mit der scharfkantigen Konturkante aufreißt.

Währendessen beginnt gemäß Fig. 4 die Saugdüse 33 gesteuert durch die Kurvenscheibe 20 sich in die Bahn der Fördermulde 5 abzusenken und taucht in die noch durch das spatelförmige Element 32 und den Ausbreiter 29 offengehaltene Bauchhöhle ein. In diesem Augenblick werden diese Elemente aus der Bauchhöhle ausgesteuert und gleichzeitig die Saugdüse 33 mit Vakuum beaufschlagt. Wie aus Fig. 4 ersichtlich, ist beim Absenken der Saugdüse 33 die Haltezunge 40 zurückgeblieben, was dadurch erreicht wird, daß sich diese auf einer an der Fördermulde 5 angebrachten Steuerschiene abstützt. Mittels des Vakuums werden nun die Eingeweide in die Saugdüse 33 eingezogen und damit durch diese quasi aufgesammelt. Kurz vor Beginn des Rückzugs der Saugdüse 33 aus der Bauchhöhle, was etwa im Bereich der Kiemenhöhle geschieht, wird die Haltezunge 40 , wie aus Fig. 5 ersichtlich, freigeben, so daß sich diese unterstützt durch Federkraft gegen die Schaufelfläche des Vorsatzes 36 bewegt. Dabei bewirkt sie durch Eindringen in den Durchbruch 39 eine formschlüssige Klemmung des Schlundes und ggf. der Eingeweide, so daß diese beim Aussteuern der Saugdüse 33 aus der Bauchhöhle abgerissen werden. Etwa gleichzeitig damit wird schließlich über die Kurvenscheibe 21 die Bürste 46 in die Bauchhöhle eingesteuert, wobei das Einführen durch ein nicht gezeigtes Ausbreiterblech erleichtert wird.

Der oben beschriebene Bearbeitungsprozeß führt zu einem sauber ausgenommenen Fisch, in dem noch die Kiemen enthalten sind. Das wird dadurch gewährleistet, daß die Saugdüse 33 rechtzeitig aus der Bauchhöhle zurückgezogen wird und dadurch, daß infolge der Ausgestaltung der seitlichen Begrenzungsflächen mit dem Abweiserkanten 38 ein Unterfassen des Kiemenapparates nicht möglich ist. Soll dieser jedoch mit entfernt werden, so ist anstelle der Saugdüse 33 die in Fig. 6 dargestellte Saugdüse 41 und anstelle der Haltezunge 40 der Klemmhalter 45 einzusetzen. Darüberhinaus ist die Kurvenscheibe 20 im Sinne einer Verzögerung des Aussteuerzeitpunktes zu verändern, was durch Ausrücken der Kurvenscheibe 20 und Einrücken einer entsprechenden Kurvenscheibe geschehen kann. Die Saugdüse 41 arbeitet zunächst wie die Saugdüse 33 . Sie unterfährt jedoch kurz vor dem Aussteuern aus der Kiemenhöhle mit ihrem als flacher Löffel 43 gestalteten Vorsatz 42 den Kiemenapparat, wobei die Verbindungsstelle der Kiemenbögen mit dem Fischkörper in der Aussparung 44 Platz findet. Gleichzeitig senkt sich der Klemmhalter 45 unter Federbelastung auf die Löffelfläche ab, so daß der Schlund und die Kiemen eingeklemmt werden. Das hat die gewünschte Folge, daß beim Aussteuern der Saugdüse 41 der Schlund ab- und der Kiemenapparat herausgerissen werden. Mit dem nachfolgenden Bürstvorgang, der unter Zufuhr von reichlich Wasser durchgeführt wird, werden schließlich noch in der Bauchhöhle verbliebene Eingeweide- und Blutreste beseitigt.

Die erfindungsgemäße Einrichtung eignet sich hervorragend zur Bearbeitung kleiner Chargen Fisch unterschiedlicher Größe, wie sie häufig in Zuchtbetrieben anfallen. Diese Eignung ergibt sich insbesondere aus der Möglichkeit, den Kettenförderer 1 mit Fördermulden 5 unterschiedlicher Größe zu bestücken. Die entsprechenden Fördermulden 5 sind dann bezüglich ihrer Geometrie so gearbeitet, daß der passende Fisch eine Lage einnimmt, die dessen korrekte Bearbeitung ohne Veränderung des Kurvengetriebes ermöglicht. Zur besseren Kenntlichmachung können die Fördermulden 5 größeneinheitlich farbig gekennzeichnet sein, so daß es keine Schwierigkeit macht, den jeweils passenden Fisch zuzuordnen.

## Patentansprüche

1. Verfahren zum Entweiden ungeköpfter Fische, insbesondere von Zuchtfischen wie Forellen, durch Öffnen der Bauchhöhle durch vom Bereich des Anus' ausgehendes Schlitzen der die Bauchhöhle umschließenden Bauchdecke längs des Bauchsaums, und Entnehmen der Eingeweide durch Absaugen, wobei die Eingeweide vom Anus zum Kopf hin fortschreitend aufgesammelt werden, **dadurch gekennzeichnet,** daß der Darm im Bereich des Anus' gleichzeitig mit dem Öffnen der Bauchhöhle von der Bauchdecke gelöst wird, und daß der Schlund und wahlweise die Kiemen klemmend erfaßt und im Mundhöhlenbereich abgerissen werden.

2. Einrichtung zur Durchführung des Verfahrens nach Anspruch 1 mit einem Förderer umfassend mindestens eine. Fischaufnahme zum Stützen des zu bearbeitenden Fisches mindestens an seinem Rücken und zum Vorschieben des Fisches mit voraus weisen dem Schwanz, sowie relativ zu der Bahn derselben steuerbare Mittel zum verfahrensgemäßen Bearbeiten der Fische, wobei die Mittel zum Bearbeiten ein rotierend angetriebenes Schneidwerkzeug zum Öffnen der Bauchhöhle zwischen den Bereichen des Anus' und der Kiemenhöhle und eine die Eingeweide durch Absaugen entnehmende Einrichtung umfassen, **dadurch gekennzeichnet,** daß
- als Schneidwerkzeug (22) zum Öffnen der Bauchhöhle ein Kreismesser (23) mit dessen Flanken zugeordneten, sich im wesentlichen radial bis in die Nähe der Schneide (24) des Kreismessers (23) erstreckenden Messerklingen (26) Verwendung findet,
- die Einrichtung zum Absaugen eine Saugdüse (33) mit gegen die Vorschubrichtung der Fische weisender Saugöffnung (35) aufweist, wobei der Saugdüse (33) separat steuerbare klemmittel zum zeitweisen Festhalten der Eingeweide und wahlweise der Kiemen zugeordnet sind und
- zwischen dem Schneidwerkzeug (22) und der Saugdüse (33) ein Schaber (31) zum mindestens partiellen Öffnen der Blutbahn des Fisches vorgesehen ist.

3. Einrichtung nach Anspruch 2 , **dadurch gekennzeichnet,** daß der Förderer einzelne, hintereinander angeordnete Fördermulden (5) umfaßt, die (5) an ihrem vorauslaufenden Ende (9) mit einem steuerbaren Klemmechanismus (10) für den Schwanzbereich des Fisches und deren nachlaufendes Ende mit einem den Unterkiefer des Fisches übergreifenden Kopfanschlag (8) versehen ist.

4. Einrichtung nach Anspruch 3 , wobei die Steuerung der Mittel zum Bearbeiten durch ein mit dem Förderer synchron angetriebenes Kurvengetriebe (16) erfolgt, **dadurch gekennzeichnet,** daß die Fördermulden (5) für die Aufnahme der Fische, sowohl hinsichtlich der Höhenlage ihrer den Rücken der Fische stützenden Bodenfläche, als auch hinsichtlich der Anordnung des Kopfanschlages (8) relativ zu dem durch das Kurvengetriebe (16) vorgegebenen Steuerweg, insbesondere des Schneidwerkzeuges (22) , fischgrößenabhängig angepaßt ausgeführt sind.

5. Einrichtung nach einem der Ansprüche 2 bis 4 , **dadurch gekennzeichnet,** daß der Förderer (1) mit unterschiedlichen Fördermulden (5) zur Aufnahme unterschiedlich großer Fische bestückt ist.

6. Einrichtung nach Anspruch 5 , **dadurch gekennzeichnet,** daß die Fördermulden (5) größeneinheitlich durch unterschiedliche Farbgebung gekennzeichnet sind.

7. Einrichtung nach Anspruch 2 , **dadurch gekennzeichnet,** daß das Kreismesser (23) mit durch symmetrische Anfasung (25) erzeugter Schneide (24) versehen ist und die Messerklingen (26) in Drehrichtung des Kreismessers (23) mindestens eine vorauslaufende Kante (27) aufweisen, die mindestens in dem in den Bereich der Anfasung (25) des Kreismessers (23) aufragenden Teil jeweils durch eine an der der Flanke des Kreismessers (23) zuweisende Fläche der Messerklinge (26) angeordnete Fase (28) ausgeschärft ist.

8. Einrichtung nach Anspruch 2 , **dadurch gekennzeichnet,** daß der Schaber (31) zum Öffnen der Blutbahn aus einem an seiner Außenkontur der Querschnittsform der Bauchhöhle im wesentlichen angepaßten spatelförmigen Element (32) besteht, das zumindest in dem am tiefsten in die Bauchhöhle des Fisches eintauchenden Bereich mit einer scharfen, gegen die Laufrichtung der Fördermulden (5) weisenden Konturkante versehen ist.

9. Einrichtung nach Anspruch 2 , **dadurch gekennzeichnet,** daß die Saugdüse (5) ein Gehäuse (34) aufweist, dessen in die Bauchhöhle des Fisches eintauchender Teil der Querschnittsform der Bauchhöhle im wesentlichen angepaßt ist.

10. Einrichtung nach einem der Aprüche 2 bis 9 , **dadurch gekennzeichnet,** daß der in die Bauchhöhle des Fisches eintauchende Teil der Saugdüse (33) mit einem schaufelartigen Vorsatz (36) versehen ist.

11. Einrichtung nach Anspruch 10 , **dadurch gekennzeichnet,** daß die seitlichen Begrenzungsflächen (37) des schaufelartigen Vorsatzes (36) von dem vorausweisenden Ende desselben in Laufrichtung der Fördermulden (5) aufsteigende Abweiserkanten (38) bilden.

12. Einrichtung nach Anspruch 10 , **dadurch gekennzeichnet,** daß der schaufelartige Vorsatz (42) als flacher Löffel (43) ausgebildet ist.

## Claims

1. Method of degutting beheaded fish, particularly of farmbred fish such as trout, by opening of the belly cavity through slits going out from the region of the anus along the belly edge to the abdominal wall enclosing the belly cavity, and removal of the entrails by suction, wherein the entrails are continously gathered from the anus to the head, characterised thereby that the intestine in the region of the anus is detached from the abdominal wall simultaneously with the opening of the belly cavity and that the gullet and selectably the gills are gripped in clamping manner and are torn off in the region of the mouth cavity.

2. Equipment for the carrying out of the method according to claim 1, with a conveyor comprising at least one fish receptacle for support of the fish, at least at its back, to be processed and for advance of the fish with tail pointing forwards, as well as means, which are controllable relative to the path of the same, for the processing of the fish according to the method, wherein the means for processing comprise a rotationally driven cutting tool for the opening of the belly cavity between the regions of the anus and the gill cavity and a device removing the entrails through suction, characterised thereby that
- a circular knife (23) with blades (26) associated with the flanks of the belly cavity and extending substantially radially up to the vicinity of the edge (24) of the circular knife (23) finds use as cutting tool (22) for opening of the belly cavity,
- the equipment for sucking away comprises a suction nozzle (33) with suction opening (35) facing against the direction of advance of the fish, wherein the suction nozzle (23) is associated with separately controllable clamping means for temporary retention of the entrails and selectably the gills, and
- a scraper (31) for at least partial opening of the bloodstream of the fish is provided between the cutting tool (22) and the suction nozzle (33).

3. Equipment according to claim 2, characterised thereby that the conveyor comprises individual conveyor troughs (5) which are arranged one behind the other, are provided at their leading ends (9) with a controllable clamping mechanism (10) for the tail region of the fish and at their trailing ends with a head abutment (8) engaging over the mandible of the fish.

4. Equipment according to claim 3, wherein the control of the means for processing takes place through a cam gear (16) driven synchronously with the conveyor, characterised thereby that the conveyor troughs (5) for reception of the fish are constructed to be adapted in dependence on fish size not only with respect to the height position of their base surfaces supporting the backs of the fish but also with respect to the arrangement of the head abutment (8) relative to the control path, which is predetermined by the cam gear (16), especially of the cutting tool (22).

5. Equipment according to one of claims 3 to 4, characterised thereby that the conveyor (1) is equipped with different conveyor troughs (5) for reception of fish of different sizes.

6. Equipment according to claim 5, characterised thereby that the conveyor troughs (5) of uniform sizes are distinguished by different colouring.

7. Equipment according to claim 2, characterised thereby that the circular knife (23) is provided with a cutting edge (24) produced by symmetrical chamfering (25) and the knife blades (26) have in rotational direction of the circular knife (23) at least one leading edge (27) which is bevelled at least in the part, which projects into the region of the chamfer (25) of the circular knife, by a respective chamfer (28) arranged at the surface of the knife blade (26) facing the flank of the circular knife (23).

8. Equipment according to claim 2, characterised thereby that the scraper (31) for the opening of the bloodstream consists of a spatulate element (32) which at its outer contour is substantially matched to the cross-sectional shape of the belly cavity and which is provided at least in the region dipping deepest into the belly cavity of the fish with a sharp profile edge facing against the running direction of the conveyor troughs (5).

9. Equipment according to claim 2, characterised thereby that the suction nozzle (5) comprises a housing (34), the part of which dipping into the belly cavity of the fish is substantially matched to the cross-sectional shape of the belly cavity.

10. Equipment according to one of claims 2 to 9, characterised thereby that the part of the suction nozzle (33) dipping into the belly cavity of the fish is provided with a shovel-like projection (36).

11. Equipment according to claim 10, characterised thereby that the lateral boundary surfaces (37) of the shovel-like projection (36) forms deflector edges (38) rising up from the leading end thereof in the running direction of the conveyor troughs (5).

12. Equipment according to claim 10, characterised thereby that shovel-like projection (42) is constructed as a flat scoop.

## Revendications

1. Procédé pour l'éviscération de poissons non étêtés, notamment de poissons d'élevage tels que des truites, par ouverture de la cavité abdominale, en refendant la paroi abdominale enserrant la cavité abdominale, à partir de la région de l'anus, le long de la lisière abdominale, et prélèvement des viscères par aspiration, les viscères étant collectées progressivement à partir de l'anus en direction de la tête, caractérisé en ce que l'intestin est séparé de la paroi abdominale, dans la région de l'anus, en même temps que l'ouverture de la paroi abdominale, et en ce que le gosier et éventuellement les branchies, sont saisis par pincement et sont arrachés dans la région de la cavité buccale.

2. Dispositif pour la mise en oeuvre du procédé selon la revendication 1, comportant un transporteur, qui comprend au moins un élément de réception de poisson pour supporter le poisson à traiter, au moins à sa région dorsale, et pour faire avancer le poisson, la queue dirigée vers l'avant, ainsi que des moyens pouvant être commandés par rapport à la trajectoire de cet élément de réception de poisson, et destinés au traitement des poissons conformément au procédé, les moyens pour le traitement, comprenant un outil de coupe entraîné en rotation, pour l'ouverture de la cavité abdominale entre les régions de l'anus et des ouïes, et un dispositif qui prélève les viscères par aspiration caractérisé
- en ce que l'on utilise, en guise d'outil de coupe (22) pour l'ouverture de la cavité abdominale, un couteau circulaire (23), aux flancs duquel sont associées des lames de coupe (26) s'étendant sensiblement de manière radiale jusqu'à proximité de l'arête de coupe (24) du couteau circulaire (23),
- en ce que le dispositif pour l'aspiration présente une buse d'aspiration (33) avec une ouverture d'aspiration (35) dirigée à l'encontre de la direction d'avance des poissons, des moyens de pincement pouvant être commandés séparément étant associés à la buse d'aspiration (33) pour retenir temporairement les viscères et éventuellement les branchies, et
- en ce qu'entre l'outil de coupe (22) et la buse d'aspiration (33), est prévu un racleur (31) pour ouvrir au moins partiellement le système circulatoire du poisson.

3. Dispositif selon la revendication 2, caractérisé en ce que le transporteur comprend des augets de transport (5) disposés les uns à la suite des autres, et en ce que ceux-ci (5) sont pourvus à leur extrémité en avant (9) par rapport au sens d'avance, d'un mécanisme de pincement (10) commandable pour la région caudale du poisson, et à leur extrémité arrière, d'une butée de tête (8) surmontant la mâchoire inférieure du poisson.

4. Dispositif selon la revendication 3, la commande des moyens destinés au traitement s'effectuant à l'aide d'une transmission à cames (16) entraînée de manière synchronisée avec le transporteur, caractérisé en ce que les augets de transport (5) destinés à recevoir les poissons, sont réalisés de manière adaptée à la taille des poissons, aussi bien quant à la position en hauteur de leur surface de fond supportant le dos des poissons, que quant à l'agencement de la butée de tête (8), par rapport à la trajectoire de commande, notamment de l'outil de coupe (22), prédéfinie par la transmission à cames (16).

5. Dispositif selon l'une des revendications 2 à 4, caractérisé en ce que le transporteur (1) est équipé d'augets de transport (5) différents, pour recevoir des poissons de taille différente.

6. Dispositif selon la revendication 5, caractérisé en ce que les augets de transport (5) sont caractérisés par une coloration différente pour chaque taille.

7. Dispositif selon la revendication 2, caractérisé en ce que le couteau circulaire (23) est pourvu d'une arête de coupe (24) engendrée par un chanfreinage symétrique (25), et en ce que les lames de coupe (26) présentent, en avant dans la direction du sens de rotation du couteau circulaire (23), au moins une arête (27), qui est affûtée, au moins dans la partie faisant saillie dans la zone du chanfreinage (25) du couteau circulaire (23), pour chacune des lames, par un chanfrein (28) agencé sur la face de le lame de coupe (26) tournée vers le flanc du couteau circulaire (23).

8. Dispositif selon la revendication 2, caractérisé en ce que le racleur (31) destiné à ouvrir le système circulatoire, est constitué d'un élément (32) en forme de spatule dont le contour extérieur est sensiblement adapté à la forme de la section transversale de la cavité abdominale, et qui est pourvu, au moins dans la zone plongeant le plus profondément dans la cavité abdominale du poisson, d'une arête de contour vive, dirigée à l'encontre de la direction de déplacement des augets de transport (5).

9. Dispositif selon la revendication 2, caractérisé en ce que la buse d'aspiration (33) présente un carter (34), dont la partie plongeant dans la cavité abdominale du poisson est sensiblement adaptée à la forme de la section transversale de la cavité abdominale.

10. Dispositif selon l'une des revendications 2 à 9, caractérisé en ce que la partie de la buse d'aspiration (33) plongeant dans la cavité abdominale du poisson est pourvue d'une avancée (36) en forme de godet.

11. Dispositif selon la revendication 10, caractérisé en ce que les surfaces de limitation latérales (37) de l'avancée (36) en forme de godet, forment des arêtes de déflecteur (38) s'élevant dans la direction de déplacement des augets de transport (5), en partant de l'extrémité de l'avancée en forme de godet, dirigée vers l'avant.

12. Dispositif selon la revendication 10, caractérisé en ce que l'avancée en forme de godet (42) est constituée comme une cuillère plate (43).
